# EUROPÄISCHE PATENTSCHRIFT

(11) **EP 1 611 938 B1**
(45) Veröffentlichungstag und Bekanntmachung des Hinweises auf die Patenterteilung: **15.08.2007**
(21) Anmeldenummer: 05012072.4
(22) Anmeldetag: 04.06.2005
(51) Int. Cl.: B01D 46/52

(54) **Filterelement**
Filtering element
Élément filtrant

(30) Priorität: 01.07.2004 DE 102004031809
(43) Veröffentlichungstag der Anmeldung: 04.01.2006
(73) Patentinhaber: Carl Freudenberg KG, 69469 Weinheim (DE)
(72) Erfinder: Häfner, Uwe, 69469 Weinheim (DE); Capuani, Peter, 69483 Waldmichelbach (DE); Dobner, Roland, 69483 Wald-Michelbach (DE); Bräunling, Volker, 64646 Heppenheim (DE)

(56) Entgegenhaltungen:
- DE-A1- 10 241 748
- PATENT ABSTRACTS OF JAPAN Bd. 1997, Nr. 11, 28. November 1997 (1997-11-28) -& JP 09 173747 A (DENSO CORP), 8. Juli 1997 (1997-07-08)
- PATENT ABSTRACTS OF JAPAN Bd. 015, Nr. 378 (M-1161), 24. September 1991 (1991-09-24) -& JP 03 152319 A (HITACHI LTD; others: 01), 28. Juni 1991 (1991-06-28)

## Beschreibung

### Technisches Gebiet

Die Erfindung betrifft ein Filterelement mit einer im Wesentlichen zick-zack-förmig gefalteten Filterbahn, insbesondere aus Vliesstoff, zum Einsetzen in eine Aufnahmeeinrichtung, wie zum Beispiel in einen Filterrahmen und/oder ein Filtergehäuse, mit wenigstens einer stirnseitig angeordneten, im Wesentlichen plan ausgebildeten Wandung, wobei das Filterelement in Faltenrichtung gesehen wenigstens ein stirnseitiges Ende aufweist, welches der im Wesentlichen plan ausgebildeten stirnseitigen Wandung der Aufnahme zugeordnet ist. Des weiteren betrifft die Erfindung eine Filteranordnung mit einem Filterelement und einer Aufnahmeeinrichtung.

### Stand der Technik

Filterelemente mit zick-zack-förmig gefalteter Filterbahn, insbesondere aus Vliesstoff, werden für die verschiedensten Anwendungszwecke hergestellt. Beispielsweise werden sie zum Filtrieren von Frischluft für den Innenraum eines Kraftfahrzeugs, aber auch in Anlagen zum Klimatisieren von Räumen benutzt. In Kraftzfahrzeugen werden solche Filterelemente in entsprechende Aufnahmeeinrichtungen, wie z. B. Filterrahmen und/oder Filtergehäuse, eingesetzt. Nachteilig an solchen Filterelementen bzw. einer solchen Filteranordnung ist, dass es insbesondere an den stirnseitigen Enden der Filterelemente zu Leckagen kommen kann. Diese können im Dauerbetrieb zu Verwerfungen bzw. Deformation der angrenzenden Falten führen, woduch sich der Bypasseffekt noch zusätzlich verstärkt und schließlich eine unzureichende Filterflächennutzung die Folge sein kann. Hierdurch besteht die Gefahr, dass die zulässigen technischen Leckageanforderungen nicht mehr erfüllt werden könnten. Bei besonderen Anforderungen an die Dichtigkeit ist man daher zunehmend dazu übergegangen, im Stirnbereich des Filterelements zusätzliche Dicht- und/oder Versteifungselemente, wie z. B. Labyrinthdichtungen, Schäume, Profile oder insbesondere zusätzliche Vliesstoff- oder Textilkanten in unterschiedlichster Ausführungsform usw. zur Abdichtung vorzusehen.

Die DE 102 41748 A1 offenbart ein Filterelement mit einem zick-zack gefalteten Filterpack, wobei in mindestens einer zur Faltung parallelen Stirnseite des Faltenpacks ein Versteifungselemente vorgesehen ist.

### Darstellung der Erfindung

Aufgabe der Erfindung ist, ein Filterelement bzw. eine Filteranordnung der eingangs genannten Art so weiterzubilden, dass im Einbauzustand eine größere Dichtigkeit erzielt wird.

Diese Aufgabe wird gelöst mit einem Filterelement mit allen Merkmalen des Patentanspruchs 1 sowie mit einer Filteranordnung mit allen Merkmalen des Patentanspruchs 5. Vorteilhafte Ausgestaltungen der Erfindung sind in den Unteransprüchen beschrieben.

Gemäß der Erfindung ist bei einem Filterelement mit einer im Wesentlichen zick-zack-förmig gefalteten Filterbahn, insbesondere aus Vliesstoff, welches in eine Aufnahmeeinrichtung, wie zum Beispiel in einen Filterrahmen und/oder ein Filtergehäuse, mit wenigstens einer stirnseitig angeordneten, im Wesentlichen plan ausgebildeten Wandung einsetzbar ist, wobei das Filterelement in Faltenrichtung gesehen wenigstens ein stirnseitiges Ende aufweist, welches der im Wesentlichen plan ausgebildeten stirnseitigen Wandung der Aufnahme zugeordnet ist, vorgesehen, dass das stirnseitige Ende des Filterelements definiert konvex nach aussen gewölbt ist und dass das Filterbahnmaterial so gewählt und/oder am stirnseitigen Ende so konditioniert ist, dass das stirnseitige Ende des Filterelements beim Einsetzen in die Aufnahme ohne Wellenbildung unter elastischer Vorspannung dichtend an die zugeordnete Wandung der Aufnahme anlegbar ist.

Es hat sich in überraschender Weise gezeigt, dass diese usprünglich von den Erfindern als unerwünscht und fehlerhaft erachtete Ausbildung des stirnseitigen Endes des Filterelements, die beispielsweise auf eine nicht vollständig ausgeprägte Faltenspitzengeometrie des Filtermaterials im Herstellungsverfahren zurückgeführt werden kann, zu einer wesentlichen Verbesserung der Abdichtung des Filterelements gegenüber der Aufnahmeeintrichtung führen kann. Voraussetzung hierfür ist lediglich, dass das Filterbahnmaterial so gewählt bzw. im stirnseitigen Endbereich des Filterelements so konditioniert ist, dass es zu keiner Wellenbildung beim Anlegen an die zugeordnete, im Wesentlichen plan ausgebildete Wandung kommt.

Wenn die Erkenntnis, dass eine konvexe Auswölbung des stirnseitigen Endes des Filterelements zu einer verbesserten Abdichtung gegenüber der Aufnahme führen kann, erst einmal gewonnen ist, sind die Maßnahmen, die zu ergreifen sind, um eine Wellenbildung des Filterbahnmaterials beim Anpressen des konvex ausgewölbten Endes des Filterelements an die zugeordnete, im Wesentlichen plan ausgebildete Gehäusewandung zu vermeiden, weitgehend trivial. Es liegt beispielsweise auf der Hand, dass die erfindungsgemäße Wirkung um so besser erzielt wird, je steifer das Filterbahnmaterial ist. Es konnte festgestellt werden, dass die unerwünschte Wellenbildung insbesondere dann auftritt, wenn es sich um ein sehr dünnes, flexibles Filterbahnmaterial handelt. Auch eine Beschichtung, beispielsweise eine Gummierung des Filterbahnmaterials am stirnseitigen Ende des Filterelements führt zu einer Verbesserung der erfindungsgemäßen Wirkung. Unter Konditionierung im Sinne der Erfindung sollen daher alle Maßnahmen verstanden werden, die dazu geeignet sind, die Filterbahnmaterialeigenschaften so zu beeinflussen, beipielsweise das Filterbahnmaterial so weit zu versteifen, dass die oben erwähnte Wellenbildung weitgehend vermieden wird.

Die der erfindungsgemäß ausgebildeten Stirnseite des Filterelements zugeordnete stirnseitige Gehäusewandung ist im Wesentlichen plan ausgebildet. Es liegt auf der Hand, dass die erfindungsgemäße Wirkung auch dann auftritt, wenn die zugeordnete Gehäusewandung in die eine oder andere Richtung leicht (konvex oder konkav) gewölbt ist.

Das richtige Maß für die Auswölbung kann vom Fachmann in einfacher Weise, beispielsweise anhand einiger einfacher Routine-Experimente, leicht ermittelt werden, wobei auch Gehäuse- und Filterelement-Toleranzen zu beachten sind.

In einer bevorzugten Ausführungsform der Erfindung weist die Filterbahn am stirnseitigen Ende einen Faltenauslauf auf, wobei die konvexe Wölbung in den Faltenauslauf eingebracht ist. Diese Ausführungsform ist sehr einfach und kostengünstig herzustellen. Ist das Filterbahnmaterial so beschaffen, dass es beim Anpressen des Faltenauslaufs an die Wandung der Aufnahmeeinrichtung zur Wellenbildung neigt, kann das Material beispielsweise, wie oben beschrieben, in diesem Bereich versteift oder imprägniert oder gummiert oder in ähnlicher Weise behandelt werden. Vorzugsweise ist das Filterbahnmaterial selbst jedoch so beschaffen, besitzt beispielsweise eine so große Steifigkeit, dass auf jegliche Hilfsmittel zur Abdichtung verzichtet werden kann.

Besonders einfach sind die Verhältnisse, wenn als Filterelement ein an sich bekanntes Kombifilter verwendet wird. Hierunter versteht man Filterelemente, die in der Regel aus Vliesstoff bestehen und bei denen die Filterbahn wenigstens eine Lage aus einem Partikel filternden Material und wenigstens eine Lage aus einem Material, das chemische Schadstoffe filtert, insbesondere ein adsorbierendes Material, wie zum Beispiel Aktivkohle, umfasst. Dadurch, dass die Filterbahn sich aus mehreren Lagen aus Filtermaterial zusammensetzt, besitzt sie eine größere Steifigkeit als einfache Filter, wodurch eine Wellenbildung beim Anpressen des gewölbten Faltenauslaufs, an die Aufnahmewandung, nicht auftritt. Auch sind Kombifilter in der Regel zur Fixierung der Aktivkohle in dem Trägermaterial am Filterbahnrand mit einer Gummierung versehen, die zusätzlich zur Abdichtung beiträgt. Aber auch ohne diese Gummierung wird bei einem Kombifilter der geannten Art eine sehr gute Dichtwirkung erzielt. Die Dichtwirkung ist insbesondere so gut, dass keinerlei zusätzliche Abdichtmittel erforderlich sind. Diese gute Dichtwirkung wird alleine durch die konvexe Auswölbung des Faltenauslaufs erzielt, ohne daß zusätzliche Dicht- und/oder Versteifungselemente (Labyrinthdichtungen, Schäume, Profile oder insbesondere zusätzliche Vliesstoff- oder Textilkanten in unterschiedlichster Ausführungsform usw.) eingesetzt werden, die in einem zusätzlichen Fertigungschritt aufgebracht werden müßten. Diese sehr gute Dichtwirkung auch bei Verzicht auf zusätzliche Dicht- und/oder Versteifungselemente tritt nicht nur in dem Fall auf, dass die dem erfindungsgemäß ausgebildeten stirnseitigen Ende des Filterelements zugeordnete stirnseitige Aufnahmewandung im Wesentlichen plan ausgebildet ist, sondern auch im Falle einer leichen konvex- oder konkav ausgebildeten Wölbung der Wandung.

Das erfindungsgemäße Filterlement kann in einfacher Weise beispielsweise auf auf einer vollautomatischen Kantenleimanlagen, bei denen die Filter durch Querschneiden einer theoretisch endlosen zick-zack-förmig gefalteten Filterbahn erzeugt werden, sehr kostengünstig produziert werden. Wie bereits oben erwähnt, kann es hierbei insbesondere bei Filterbahnmaterialien, die eine gewisse Steifigkeit aufweisen, zu einer nicht vollständigen Ausprägung der Faltenspitzengeometrie kommen, was schließlich zu der ursprünglich als unerwünscht erachteten erfindungsgemäßen Auswölbung des Faltenauslaufs führt.

Bei besonders hohen Anforderungen an die Dichtigkeit einer Filteranordnung können jedoch auch zusätzliche Dichtmittel vorgesehen sein. Beispielsweise kann zusätzlich zu der erfindungsgemäßen Auswölbung noch eine Labyrinth-Dichtung vorgesehen sein, beispielsweise in Form eines an sich bekannten Schwerts, das am strinseitigen Ende der Aufnahme angeordnet ist und in die stirnseitige Endfalte des Filterelements eingreift.

Die vorliegende Erfindung kann auf Filterelemente aus beliebigen Filterwerkstoffen Anwendung finden. Vorzugsweise besteht die Filterbahn jedoch aus Vliesstoff. Die Filterbahn kann, wie bereits oben erwähnt, ein- oder mehrlagig ausgebildet sein, beispielsweise eine Partikel- und eine chemische Filterlage, insbesondere eine Aktivkohlefilterlage, umfassen.

Das erfindungsgemäße Filterelement bzw. die erfindungsgemäße Filteranordnung kann überall da Anwendung finden, wo ein Fluidstrom von schädlichen Inhaltsstoffen gereinigt werden soll, unabhängig davon, ob es sich um einen Gas- oder Flüssigkeitsstrom handelt.

Eine bevorzugte Anwendung ist die in Geräten zum Klimatisieren von Räumen, wobei sowohl mobile als auch stationäre Anwendungen denkbar sind. Besonders bevorzugt wird ein erfindungsgemäßes Filterelement bzw. eine Filteranordnung in einer Klimaanlage für ein Kraftfahrzeuge eingesetzt.

Nachfolgend wird die Erfindung anhand der Figuren näher erläutert.

Es zeigen:
- Figur 1:: in schematischer Teildarstellung ein erfindungsgemäßes Filterelement in Draufsicht;
- Figur 2:: das stirnseitige Ende eines erfindungsgemäßen Filterelements aus Figur 1 in schematischer seitlicher Schnittdarstellung;
- Figur 3:: in schematischer seitlicher Schnittdarstellung das stirnseitige Ende eines Filterelements nach dem Stand der Technik;
- Figur 4:: in schematischer seitlicher Schnittdarstellung das stirnseitige Ende eines Filterelements nach dem Stand der Technik mit einer Vliesstofflasche als Abdichtelement;
- Figur 5:: in schematischer seitlicher Schnittdarstellung das stirnseitige Ende eines Filterelements nach dem Stand der Technik mit einem Dichtlippenprofil als Abdichtelement;
- Figur 6:: in schematischer Teildarstellung in Draufsicht ein erfindungsgemäßes Filterelement in der Einbausituation;
- Figur 7:: in schematischer Teildarstellung in Draufsicht ein Filterelement nach dem Stand der Technik in der Einbausituation;
- Figur 8:: ein Kraft/Weg-Diagramm, gemessen an einem erfindungsgemäßen Filterelement.

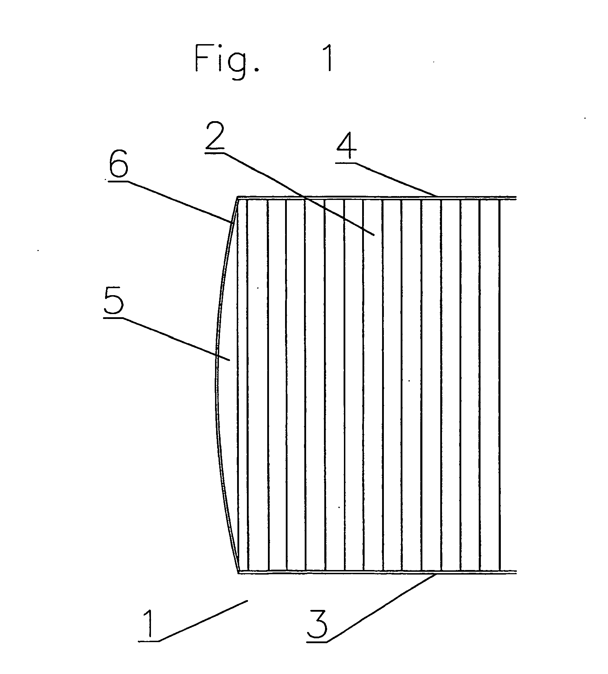

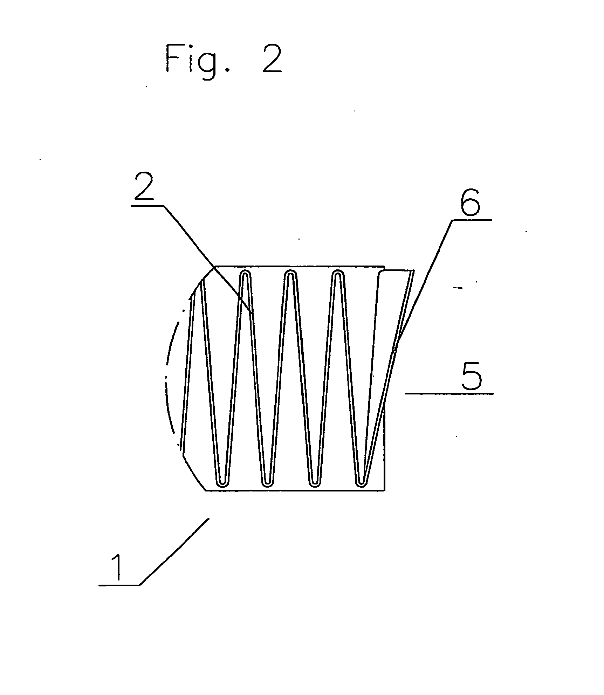

Man erkennt in den Fign. 1 und 2 ein Filterelement 1 mit einer zick-zack-förmig gefalteten Filterbahn 2. Das Filterelement 1 ist ohne Beschränkung der Allgemeinheit im wesentlichen plattenförmig mit jeweils zwei einander gegenüberliegenden Längsseiten 3, 4. In der Darstellung ist eines der beiden stirnseitigen Enden des Filterelements zu sehen. Gemäß einer bevorzugten Ausführungsform der Erfindung weist das Filterelement 1 an der Stirnseite 5 einen konvex nach außen gewölbten Faltenauslauf 6 auf. Die nachfolgenden Ausführungen gelten jedoch auch für jede mögliche andere Ausgestaltung des stirnseitigen Endes des Filterelements gemäß der Erfindung.

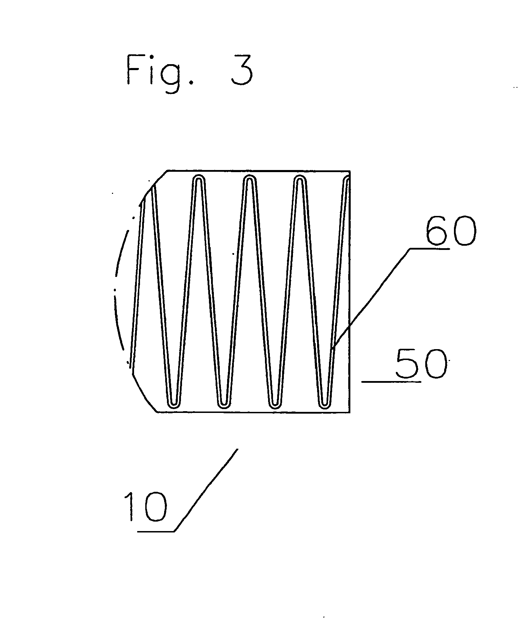

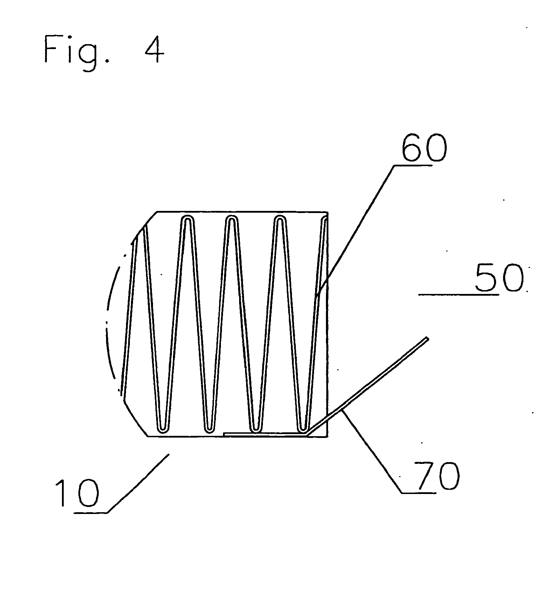

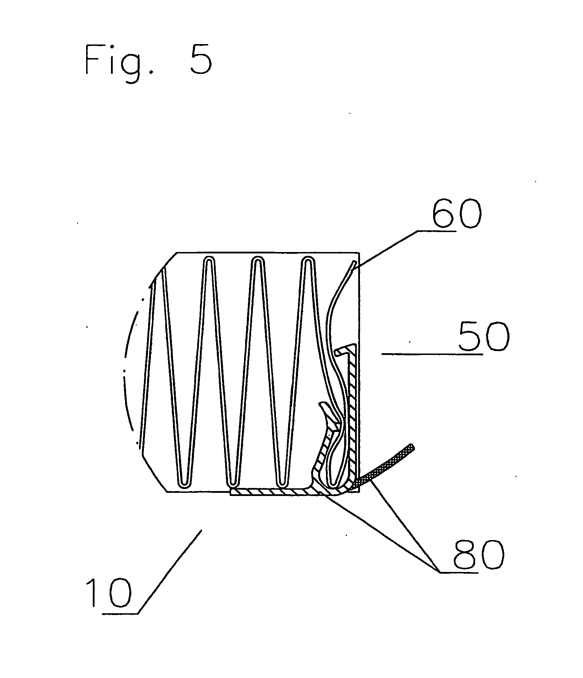

In Fig. 3 ist zum Vergleich ein Filterelement 10 nach dem Stand der Technik mit herkömmlichem Faltenauslauf 60 dargestellt. Bei einem solchermaßen ausgebildeten stirnseitigen Ende 50 des Filterelements 10 ist es erforderlich, in der Einbausituation besondere zusätzliche Abdichtelemente zur Abdichtung der stirnseitigen Enden gegenüber der zugeordneten Aufnahme-Wandung vorzusehen. Die Figuren 4 und 5 zeigen beispielhaft gebräuchliche Abdichtelemente, die zur Abdichtung des stirnseitigen Endes eines Filterelements nach dem Stand der Technik, wie in Fig. 3 dargestellt, gegenüber der zugeordneten Aufnahmeeinrichtung dienen. Zur besseren Übersichtlichkeit ist in diesen Figuren die Aufnahmeeinrichtung jeweils nicht dargestellt. Fig. 4 zeigt einen Filter mit Vlieslasche 70 und in Fig. 5 ist ein Filter mit Dichtlippenprofil 80 dargestellt.

In den Figuren bezeichnen gleiche Bezugszeichen jeweils gleiche Teile.

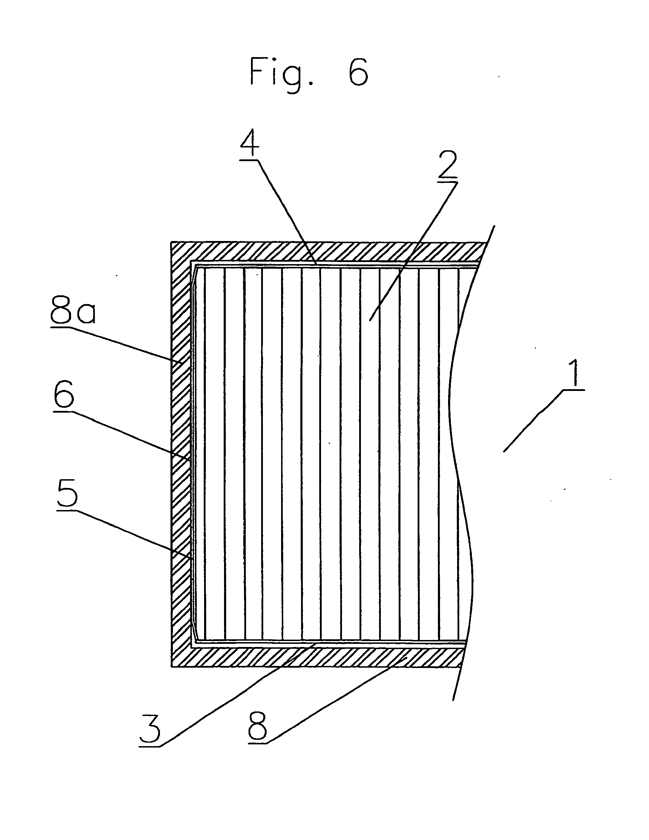

Fig. 6 zeigt ein erfindungsgemäßes Filterelement 1 in der Einbausituation. Man erkennt, dass der konvex nach aussen gewölbte Faltenauslauf 6 nahezu über seine gesamte Breite unter elastischer Vorspannung dichtend an der zugordneten Wandung 8a der Aufnahmeeinrichtung 8 anliegt.

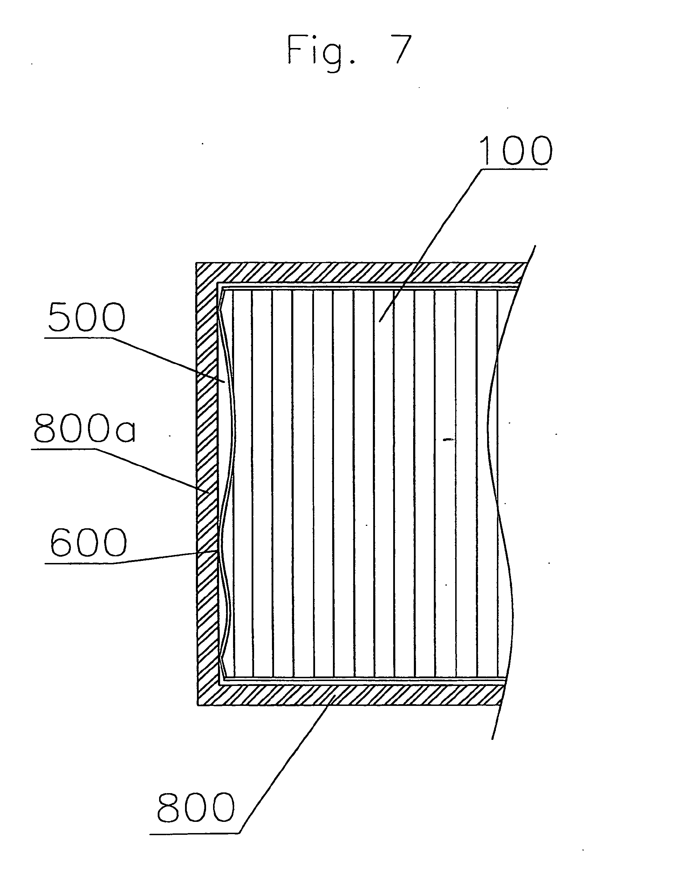

In Fig. 7 ist zum Vergleich die Einbausituation für ein Filterelement 100 mit konvex nach aussen gewölbtem Faltenauslauf 600 an dem strinseitigen Ende 500 des Filterelements 100 dargestellt, bei welchem das Filterbahnmaterial ersichtlich nicht den Anforderungen an die vorliegende Erfindung genügt. Ein solches Verhalten zeigt beispielsweise ein herkömmlicher Partikelfilter, der in der Regel aus einem relativ dünnen und flexiblen Filterbahnmaterial besteht. Man erkennt, dass der Faltenauslauf 600 trotz Anlage an der zugeordneten Wandung 800 a der Aufnahmeeinrichtung 800 Wellen schlägt. Die Dichtwirkung ist allenfalls unzureichend.

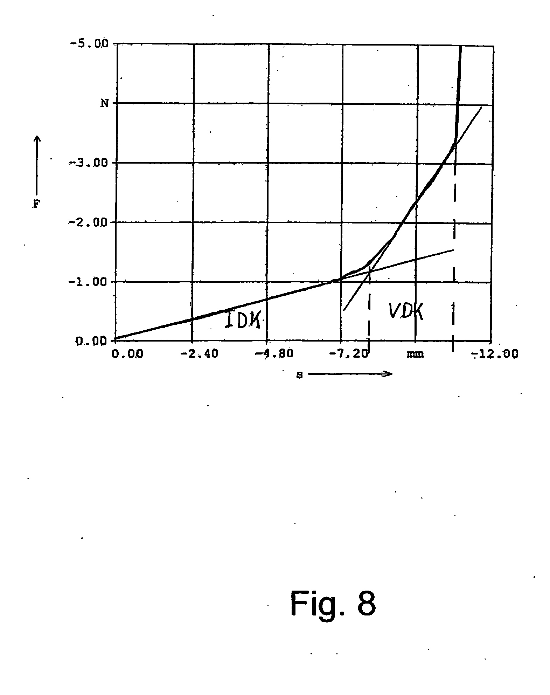

Fig. 8 zeigt das Ergebnis einer Messung der Kraft als Funktion des Weges, die auf eine Platte aufzubringen ist, die bei einem erfindungsgemäß ausgebildeten Kombifilterelement mit konvex nach aussen gewölbtem Faltenauslauf von der Stirnseite des Filterelements her auf den konvex nach aussen gewölbten Faltenauslauf aufzubringen ist, um diesen - analog zur Einbausituation in der Aufnahmeeinrichtung - parallel zu den seitlichen Begrenzungsflächen des Filterelements in Richtung zur wirksamen Filterfläche hin zu drücken. Das verwendete Kombifilterelement bestand aus einem als Partikelfilter ausgebildeten Trägermaterial aus Vliesstoff, einer Aktivkohleschicht, bei welcher Aktivkohlepartikel in Vliesstoffmaterial eingebettet sind, und einem Abdeckmaterial aus Vliesstoff und hatte eine Stirnseitenbreite von ca. 190mm bei einer Filterhöhe von ca. 25mm, der Scheitelpunkt des Faltenauslaufs war ca. 19mm von dem Faltenrücken der benachbarten Falte entfernt .

Man erkennt in dem Diagramm, dass die Kraft anfänglich nur sehr langsam mit der Verschiebung des Faltenauslaufs ansteigt. Bei einem Weg von ca. 8 mm ist eine deutliche Änderung im Kraft-Weg-Verlauf zu erkennen. Die Kraft steigt wesentlich stärker bei weiterem Andrücken an. Diese Änderung tritt in etwa bei der Stelle auf, bei der Faltenauslauf in eine im wesentlichen parallele Position zu den übrigen Faltentrücken gebracht ist. Das Faltenauslaufmaterial kann ab dieser Stelle nicht mehr ausweichen, dem weiteren Andrücken wirken Kräfte seitlich vom Filterrand entgegen, die sich in dem stärkeren Anstieg der Kurve zeigen. Der weitere sehr steile Anstieg der Kurve bei ca. 11 mm ist auf das Aufsetzen der seitlichen Filterelement-Begrenzungswände zurückzuführen auf die Platte.

Man erkennt aus diesem Diagramm einen weiteren Vorteil eines erfindungsgemäßen Filterelements. Der Kräfteverlauf im mittleren Bereich der Kurve, d . h. ab ca. 8 mm ist für die elastische Vorspannung beim Anlegen des Faltenauslaufs an die zugeordnete Gehäusewandung verantwortlich. Man sieht, dass die Kraft, die auf die Begrenzungswand wirkt, relativ hoch ist. Weiterhin ist erkennbar, dass sich dieser Bereich mit dem hohen Kräfteanstieg von dem stirnseitigen Ende der seitlichen Filterelement-Begrenzungswände (fast senkrechter Anstieg) ausgehend ca. 2 - 3 mm in Richtung zur wirksamen Filterfläche hin erstreckt. Da die Länge der seitlichen Begrenzungswände in etwa der Länge der seitlichen Aufnahmewände entspricht und beispielsweise bei der Anwendung Autoinnenraumluftfilter bei den Abmessungen von Filterelement und zugeordneter Aufnahme üblicherweise Toleranzen in der Größenordnung von ca. 2 mm erlaubt sind, werden diese Toleranzen durch die erfindungsgemäße Ausbildung des stirnseitigen Endes des Filterelements ausgeglichen. Die elastische Vorspannung ist innerhalb dieses Toleranzbereichs immer gleichbleibend hoch.

Dieses Verhalten tritt prinzipiell bei allen erfindungsgemäß ausgestalteten Filterelementen auf.

Ausführungsbeispiel : Es wurden Leckagemessungen an der Stirnseite von Kombifiltern mit unterschiedlicher Ausbildung des stirnseitigen Endbereichs durchgeführt. Als Geometrie wurde die Stirnseite eines Kombifilters (hergestellt aus in der Automobilindustrie zum Serieneinsatz kommenden Materialien) gewählt. Bei den Leckagemessungen wurde jeweils die wirksame Filterfläche abgedeckt, um den Durchfluss durch die Randbereiche zwischen Filterelement und Aufnahme zu ermitteln. Bezüglich Leckage wurde eine Stirnseite vermessen; die beiden Längsseiten, sowie die zweite Stirnseite wurden ideal abgedichtet.

Die Filter wurden bei einer angelegten Druckdifferenz von 100Pa vermessen. Die Ausbildung der Randbereiche entsprach den in und Fign. 1 bzw. 2 ("Erfindung"), Fig. 3 ("ohne stirnseitige Abdichtung"), Fig.4, ("Vlieslasche") und Fig. 5 ("Dichtlippenprofil") dargestellten Ausführungsformen.

Folgende Werte wurden messtechnisch für die Leckage an der Stirnseite ermittelt:

| Ausführungsform | Leckagerate |
|---|---|
| "Erfindung" (Fig.1&2) | 46 l/min |
| "Ohne Abdichtung"(Fig. 3) | 410 l/min |
| "Vlieslasche" (Fig. 4) | 48 l/min |
| "Dichtlippenprofil" (Fig. 5) | 38 l/min |

Die obigen Ergebnisse zeigen, dass die Leckageraten der erfindungsgemäß ausgebildeten Filteranordnung die niedrigen Leckageraten anderer bereits etablierter Dichtungssysteme mit zusätzlichen Dichtelementen erreicht. Die erfindungsgemäße Filteranordnung erfüllt damit nicht nur die in der Technik geforderten Leckageraten, sondern ist darüber hinaus auch noch einfach und kostengünstig herzustellen.

## Patentansprüche

1. Filterelement (1) mit einer im Wesentlichen zick-zack-föririg gefalteten Filterbahn (2), insbesondere aus Vliesstoff, zum Einsetzen in eine Aufnahme (8), wie zum Beispiel in einen Filterrahmen und/oder ein Filtergehäuse, mit wenigstens einer stirnseitig angeordneten, im Wesentlichen plan ausgebildeten Wandung (8a), wobei das Filterelement
(1) in Faltenrichtung gesehen wenigstens ein stirnseitiges Ende (5) mit einem Faltenauslauf (6) aufweist, welches der im Wesentlichen plan ausgebildeten Wandung (8a) der Aufnahme (8) zugeordnet ist, wobei das stirnseitige Ende (5) des Filterelements (1) in Richtung zur Wandung (8a) der Aufnahme (8) hin definiert konvex nach aussen gewölbt ist und wobei das Filterbahnmaterial (2) so gewählt und/oder am stirnseitigen Ende (5) so konditioniert ist, dass das stirnseitige Ende (5) der Filterbahn (2) beim Einsetzen in die Aufnahme (8) ohne Wellenbildung unter elastischer Vorspannung dichtend an die stirnseitige Wandung (8a) der Aufnahme (8) anlegbar ist, **dadurch gekennzeichnet, dass** die konvexe Wölbung in den Faltenauslauf (6) eingebracht ist und dass das Filterelement (1) im Bereich des Faltenauslaufs (6) versteift ist.

2. Filterelement nach Anspruch 1, **dadurch gekennzeichnet, dass** das Filterelement (1) ein an sich bekanntes Kombifilter ist, wobei die Filterbahn (2) wenigstens einer Lage aus einem Partikel filternden Material und wenigstens einer Lage aus einem Material, das chemische Schadstoffe filtert, umfasst.

3. Filterelement nach Anspruch 2, **dadurch gekennzeichnet, dass** das Material zur Filterung chemischer Schadstoffe ein adsorbierendes Material umfasst.

4. Filterelement nach Anspruch 3, **dadurch gekennzeichnet, dass** das adsorbierende Material Aktivkohle umfasst.

5. Filteranordnung, umfassend ein Filterelement (1) und eine Aufnahme (8), wie zum Beispiel einen Filterrahmen und/oder ein Filtergehäuse, in welche das Filterelement (1) einsetzbar ist, **gekennzeichnet durch** ein Filterelement nach einem der Ansprüche 1 bis 4.

6. Filteranordnung nach Anspruch 5, **dadurch gekennzeichnet, dass** zwischen dem wenigstens einen stirnseitigen Ende (5) des Filterelements (1) und der zugeordneten Wandung (8a) der Aufnahme (8) zusätzlich noch eine Labyrinth-Dichtung vorgesehen ist.

7. Filteranordnung nach Anspruch 6, **dadurch gekennzeichnet, dass** die Labyrinthdichtung durch ein an sich bekanntes Schwert in der Aufnahme (8) gebildet wird.

## Claims

1. Filter element (1), with an essentially zigzag-folded filter web (2), consisting particularly of nonwoven, for insertion into a receptacle (8), such as, for example, into a filter frame and/or a filter housing, and with at least one wall (8a) of essentially planar design, arranged on the end face, the filter element (1) having, as seen in the fold direction, at least one end face (5) having a fold run-out (6) and assigned to the wall (8a) of essentially planar design of the receptacle (8), the end face (5) of the filter element (1) being curved convexly outwards in a defined manner in the direction of the wall (8a) of the receptacle (8), and the filter-web material (2) being selected and/or conditioned on the end face (5) such that the end face (5) of the filter web (2), during the insertion of the latter into the receptacle (8), can be laid sealingly under elastic prestress against the endface wall (8a) of the receptacle (8) without wave formation, **characterized in that** the convex curvature is introduced into the fold run-out (6), and **in that** the filter element (1) is stiffened in the region of the fold run-out (6).

2. Filter element according to Claim 1, **characterized in that** the filter element (1) is a combination filter known per se, the filter web (2) comprising at least one ply consisting of a particle-filtering material and at least one ply consisting of a material which filters chemical pollutants.

3. Filter element according to Claim 2, **characterized in that** the material for the filtration of chemical pollutants comprises an adsorbing material.

4. Filter element according to Claim 3, **characterized in that** the adsorbing material comprises activated charcoal.

5. Filter arrangement, comprising a filter element (1) and a receptacle (8), such as, for example, a filter frame and/or a filter housing, into which the filter element (1) can be inserted, **characterized by** a filter element according to one of Claims 1 to 4.

6. Filter arrangement according to Claim 5, **characterized in that** a labyrinth seal is also additionally provided between the at least one end face (5) of the filter element (1) and the assigned wall (8a) of the receptacle (8).

7. Filter arrangement according to Claim 6, **characterized in that** the labyrinth seal is formed by a sword-like element, known per se, in the receptacle (8).

## Revendications

1. Elément filtrant (1) comportant une bande de filtre (2) pliée essentiellement en zigzag, en particulier en nappe de fibres, à utiliser dans un logement (8) comme par exemple dans un cadre de filtre et/ou un boîtier de filtre, avec au moins une paroi essentiellement plane (8a) disposée du côté frontal, dans lequel l'élément filtrant (1) présente, vu dans la direction des plis, au moins une extrémité frontale (5) avec une sortie de pli (6) qui est associée à la paroi essentiellement plane (8a) du logement (8), dans lequel l'extrémité frontale (5) de l'élément filtrant (1) est bombée vers l'extérieur de façon convexe définie en direction de la paroi (8a) du logement (8) et dans lequel la matière de la bande de filtre (2) est choisie et/ou est conditionnée à l'extrémité frontale (5) de telle manière que l'extrémité frontale (5) de la bande de filtre (2) puisse être appliquée de façon étanche, avec une précontrainte élastique et sans formation d'ondulations, sur la paroi frontale (8a) du logement (8) lors de son placement dans le logement (8), **caractérisé en ce que** le bombement convexe est réalisé dans la sortie de pli (6) et **en ce que** l'élément filtrant (1) est raidi dans la région de la sortie de pli (6) .

2. Elément filtrant selon la revendication 1, **caractérisé en ce que** l'élément filtrant (1) est un filtre combiné connu en soi, dans lequel la bande de filtre (2) comprend au moins une couche en une matière filtrant les particules et au moins une couche en une matière qui filtre les polluants chimiques.

3. Elément filtrant selon la revendication 2, **caractérisé en ce que** la matière destinée à filtrer les polluants chimiques comprend une matière adsorbante.

4. Elément filtrant selon la revendication 3, **caractérisé en ce que** la matière adsorbante comprend du charbon actif.

5. Dispositif de filtrage, comprenant un élément filtrant (1) et un logement (8), comme par exemple un cadre de filtre et/ou un boîtier de filtre, dans lequel l'élément filtrant (1) peut être introduit, **caractérisé par** un élément filtrant selon l'une quelconque des revendications 1 à 4.

6. Dispositif de filtrage selon la revendication 5, **caractérisé en ce qu'**il est encore prévu en plus un joint à labyrinthe entre au moins une extrémité frontale (5) de l'élément filtrant (1) et la paroi associée (8a) du logement (8).

7. Dispositif de filtrage selon la revendication 6, **caractérisé en ce que** le joint à labyrinthe est formé par une lame connue en soi dans le logement (8).
